# FASCICULE DE BREVET EUROPEEN

(11) **EP 2 788 631 B1**
(45) Date de publication et mention de la délivrance du brevet: **10.02.2016**
(21) Numéro de dépôt: 12787468.3
(22) Date de dépôt: 20.11.2012
(51) Int. Cl.: F16B 19/10

(54) **DISPOSITIF DE FIXATION SECABLE ET ASSEMBLAGE D'AU MOINS DEUX PLAQUES AVEC UN TEL DISPOSITIF DE FIXATION SECABLE**
DURCHBRECHBARE BEFESTIGUNGSVORRICHTUNG UND ANORDNUNG AUS MINDESTENS ZWEI PLATTEN MIT EINER SOLCHEN DURCHBRECHBAREN BEFESTIGUNGSVORRICHTUNG
BREAKABLE ATTACHMENT DEVICE, AND ASSEMBLY OF AT LEAST TWO PLATES COMPRISING SUCH A BREAKABLE ATTACHMENT DEVICE

(30) Priorité: 05.12.2011 FR 1161163
(43) Date de publication de la demande: 15.10.2014
(73) Titulaire: A. Raymond et Cie, 38000 Grenoble (FR)
(72) Inventeur: FENOLL, Jonathan, F-38130 Echirolles (FR)
(74) Mandataire: Prugneau, Philippe
(86) Numéro de dépôt international: PCT/EP2012/073131
(87) Numéro de publication internationale: WO 2013/083400

(56) Documents cités:
- US-A- 4 832 547

## Description

### Domaine technique

L'invention concerne de façon générale un dispositif de fixation sécable d'au moins une première et une seconde plaques superposées entre elles, le dispositif de fixation sécable comportant au moins une douille expansible d'axe principal et une goupille d'axe secondaire, la douille expansible comportant une tête de douille définissant une première surface d'appui pour la première plaque et étant traversée par au moins un orifice et prolongée par au moins une patte flexible, la goupille étant apte à être engagée dans l'orifice jusqu'à une position de verrouillage dans laquelle elle est verrouillée dans la douille expansible par des moyens de verrouillage et la patte flexible est dans une position fléchie avec son extrémité libre éloignée de l'axe longitudinal pour retenir l'arrière de la seconde plaque, le dispositif de fixation sécable comportant des première et seconde zones sécables prévues respectivement sur la douille expansible et la goupille et aptes chacune à rompre lorsque soumise à un effort prédéterminé.

L'invention concerne également un assemblage d'au moins une première et une seconde plaques comportant des ouvertures placées en regard l'une de l'autre, au moyen d'au moins un tel dispositif de fixation sécable.

### Technique antérieure

Ce type de dispositifs de fixation sécable est couramment utilisé pour la fixation entre elles de plaques de carrosserie, notamment dans le domaine des véhicules automobiles. Ces dispositifs de fixation sécable permettent de solidariser les plaques de carrosserie de manière fiable tout en autorisant, en cas d'accident, la désolidarisation des plaques de carrosserie. Dans le cas d'une plaque de carrosserie portant un élément technique de sécurité (par exemple gâche, serrure, ...), ou de structure (par exemple renfort de bouclier, équerres de fixation, ...), ou de tout autre type, cette désolidarisation permet de préserver l'intégrité de cet élément technique. Dans le cas de plaques de carrosserie formant l'habitacle, la désolidarisation autorise une plus grande déformation des plaques de carrosserie qui amortissent ainsi l'impact du choc subit par les usagers du véhicule.

La publication US 4,832,547 décrit un tel dispositif de fixation sécable pour la solidarisation de deux plaques traversées par des ouvertures superposées. Ce dispositif de fixation sécable comporte une douille expansible formée d'une tête prolongée par un tube dont l'extrémité est resserrée autour de l'axe du tube et fendue de sorte à former des languettes aptes à être déformées. Le tube de la douille expansible est destiné à être placé dans les ouvertures des plaques de sorte à les traverser, la tête étant en appui sur la face d'une des plaques, l'extrémité du tube dépassant de la face opposée de l'autre plaque. Ce dispositif de fixation sécable comporte en outre une goupille apte à être logée dans le tube de la douille expansible afin que l'extrémité de la goupille force sur les languettes de l'extrémité du tube pour les évaser légèrement en pétales de part et d'autre de l'ouverture de la plaque correspondante. Après déformation des languettes, leurs extrémités se logent dans une rainure circulaire prévue sur la goupille. Ainsi, dans cette position, la douille expansible et la goupille sont bloquées l'une part rapport à l'autre et les deux plaques sont prises en sandwich entre la tête de la douille expansible et les languettes évasées de la douille expansible. La douille expansible et la goupille comportent chacune des zones sécables permettant leur rupture respective lorsqu'elles sont soumises à un effort prédéterminé. Ainsi, les deux plaques sont libérées et peuvent se déformer librement. La zone sécable de la goupille est formée par une section réduite. La zone sécable de la douille expansible est formée par une différence de diamètres entre deux portions cylindriques de la douille expansible de diamètres différents. La présence d'une zone sécable sur la douille expansible est difficile à détecter et source d'erreur au montage avec le risque d'utiliser une douille expansible sans zone sécable pour une application en nécessitant une ou inversement.

### Exposé de l'invention

Le but de l'invention est de proposer une alternative à un dispositif de fixation sécable et à un assemblage tels que connus de l'art antérieur assurant un maintien efficace des plaques superposées, une rupture efficace lorsque soumis à un effort prédéterminé et facilitant l'identification des éléments constituant le dispositif de fixation comme étant individuellement sécable.

A cet effet, l'invention a pour objet un dispositif de fixation sécable d'au moins une première et une seconde plaques superposées entre elles, le dispositif de fixation sécable comportant au moins une douille expansible d'axe principal et une goupille d'axe secondaire, la douille expansible comportant une tête de douille définissant au moins une première surface d'appui pour la première plaque et étant traversée par au moins un orifice et prolongée par au moins une patte flexible, la goupille étant apte à être engagée dans l'orifice jusqu'à une position de verrouillage dans laquelle elle est bloquée dans la douille expansible par des moyens de verrouillage et la patte flexible est dans une position fléchie avec son extrémité libre éloignée de l'axe longitudinal pour retenir l'arrière de la seconde plaque, le dispositif de fixation sécable comportant des première et seconde zones sécables prévues respectivement sur la douille expansible et la goupille et aptes chacune à rompre lorsque soumise à un effort prédéterminé, caractérisé en ce que la douille expansible et la goupille sont agencées pour que, dans la position de verrouillage, les première et seconde zones sécables sont alignées dans un plan sensiblement parallèle à la première surface d'appui.

Dans la présente demande, les termes première, seconde et troisième ne sont utilisés que pour distinguer les éléments les uns des autres.

L'idée à la base de l'invention est de prévoir des première et seconde zones sécables de la goupille et de la douille expansible dans un même plan lorsque l'assemblage est réalisé. Le dispositif de fixation sécable peut ainsi être facilement modélisé pour dimensionner avec précision les première et seconde zones sécables de sorte qu'elles rompent de manière fiable sous un effort prédéterminé.

Le dispositif de fixation sécable selon l'invention peut avantageusement présenter les particularités suivantes :
- la première zone sécable est portée par la patte flexible, la goupille comporte une tête de goupille définissant une seconde surface d'appui destinée à venir en appui, dans la position de verrouillage, contre une troisième surface d'appui prévue sur la tête de douille à l'opposé de la première surface d'appui, la goupille comporte également un corps s'étendant de la tête de goupille et destiné à se loger dans l'orifice de la douille expansible, la seconde zone sécable étant portée par le corps ;
- selon une direction sensiblement parallèle aux axes principal et secondaire, la troisième distance séparant la seconde surface d'appui de la seconde zone sécable est sensiblement égale à la première distance séparant la troisième surface d'appui de la première zone sécable ;
- les première et seconde zones sécables sont formées par une section de dimensions réduites sensiblement perpendiculairement respectivement aux axes principal et secondaire ;
- le dispositif de fixation sécable comporte au moins une butée et un cran, l'un étant prévu sur le corps, l'autre sur la patte flexible et aptes à coopérer l'un avec l'autre dans la position de verrouillage pour former les moyens de verrouillage, la butée et le cran étant disposés au-delà des première et seconde zone sécables par rapport respectivement à la tête de douille et à la tête de goupille ;
- le dispositif de fixation sécable comporte au moins une paire d'ergots et au moins une arête d'engagement, l'une étant prévue sur le corps, l'autre sur la patte flexible et aptes à coopérer l'une avec l'autre pour former des moyens de blocage définissant une position de blocage du corps dans l'orifice, précédent la position de verrouillage, et dans laquelle les moyens de blocage n'autorisent qu'un mouvement relatif entre la goupille et la douille expansible pour éviter leur séparation avant d'atteindre la position de verrouillage ;
- la paire d'ergots et la butée sont portés par la goupille, la paire d'ergots est prévue entre la tête de goupille et la butée, et l'arête d'engagement est prévue dans l'épaisseur de la tête de goupille ;
- la douille expansible comporte au moins deux pattes flexibles disposées de part et d'autre de l'axe principal et séparées l'une de l'autre par au moins une fente s'étendant de leur extrémité libre respective jusqu'à la tête de douille.

L'invention a également pour objet un assemblage d'au moins une première et une seconde plaques comportant des ouvertures placées en regard l'une de l'autre, au moyen d'au moins un dispositif de fixation sécable tel que décrit précédemment et traversant les ouvertures.

### Présentation sommaire des dessins

La présente invention sera mieux comprise et d'autres avantages apparaîtront à la lecture de la description détaillée d'un mode de réalisation pris à titre d'exemple nullement limitatif et illustré par les dessins annexés, dans lesquels :
- la figure 1 est une vue en perspective d'une douille expansible du dispositif de fixation sécable selon l'invention ;
- la figure 2 est une vue en perspective d'une goupille du dispositif de fixation sécable selon l'invention, cette goupille étant apte à coopérer avec la douille expansible de la figure 1 ;
- la figure 3 est une vue partiellement en coupe du dispositif de fixation sécable selon l'invention représenté en cours d'assemblage dans une position de blocage ;
- la figure 4 est une vue partiellement en coupe du dispositif de fixation sécable de la figure 3 dans une position de verrouillage dans laquelle les deux plaques représentées sont fixées l'une à l'autre par le dispositif de fixation sécable, la goupille étant bloquée dans la douille expansible ;
- la figure 5 est une vue partiellement en coupe du dispositif de fixation sécable des figures 3 et 4 après rupture de leurs zones sécables.

### Description des modes de réalisation

En référence aux figures, le dispositif de fixation sécable 1 selon l'invention comporte une goupille 2 et une douille expansible 3. Il est destiné à solidariser entre elles par exemples des plaques 100, 101 traversées par des ouvertures 102, 103 et à céder lorsque soumis à un effort prédéterminé.

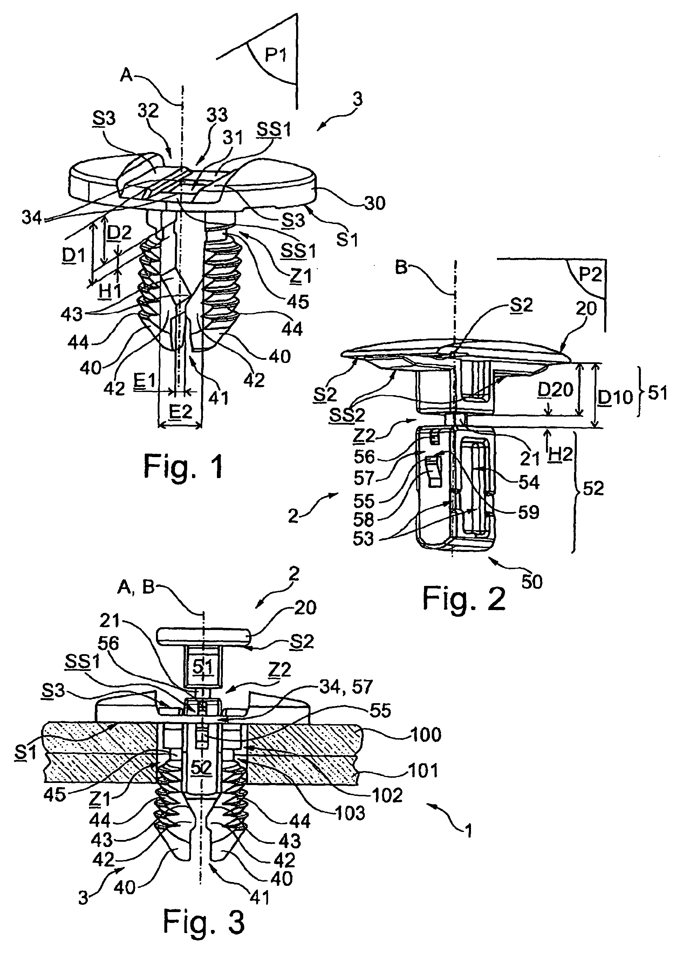

En référence aux figures 1 et 3 à 5, la douille expansible 3 comporte une tête de douille 30 et des pattes flexibles 40. La tête de douille 30 se présente sous la forme d'une rondelle traversée par un orifice 31 (visible sur la figure 1) et de laquelle s'étendent les deux pattes flexibles 40. Dans l'exemple illustré, l'orifice 31 présente une section sensiblement carrée, il peut également avoir toute autre section adaptée. La douille expansible 3 présente un plan de symétrie P1 passant par un axe principal A correspondant à l'axe de l'orifice 31. Le dessous de la tête de douille 30 définit une première surface d'appui S1 orientée vers l'extrémité libre des pattes flexibles 40 et destinée, comme décrit plus loin, à être en appui sur le dessus d'une première plaque 100. Cette première surface d'appui S1 est sensiblement plane et perpendiculaire à l'axe principal A. A l'opposé de la première surface d'appui S1, la tête de douille 30 présente une forme bombée traversée par une première rainure 32 (visible sur la figure 1) croisant l'axe principal A et définissant deux troisièmes surfaces S3 d'appui sensiblement coplanaires l'une par rapport à l'autre, disposées de part et d'autre de l'orifice 31 et dont la fonction est détaillée plus loin. Les troisièmes surfaces d'appui sont séparées par une seconde rainure 33 (visible sur la figure 1) orientée dans le même sens et sensiblement parallèlement à la première rainure 32, de largeur inférieure et de profondeur supérieure par rapport au sommet de la tête de douille 30. Cette seconde rainure 32 définit deux premières surfaces de dégagement SS1 situées entre les troisièmes surfaces d'appui S3, de part et d'autre de l'orifice 31. Ces premières surfaces de dégagement SS1 forment, avec l'orifice 31, deux arêtes d'engagement 34 (visibles sur la figure 1) qui se font face et dont la fonction est précisée plus loin. Les arêtes d'engagement 34 sont ainsi prévues dans l'épaisseur de la tête de douille 30. Les pattes flexibles 40 sont solidaires de la tête de douille 30 en leurs bases prévues de part et d'autre de l'orifice 31, de l'autre coté de la tête de douille 30 par rapport aux troisièmes surfaces d'appui S3. Les pattes flexibles 40 sont ainsi séparées l'une de l'autre par une fente 41 s'étendant des extrémités libres des pattes flexibles 40 jusqu'à la tête de douille 30, sensiblement parallèlement à l'axe principal A. Selon une direction parallèle à l'axe principal A, chaque patte flexible 40 est disposée en regard d'une troisième surface d'appui S3. Les pattes flexibles 40 comportent des butées 42 prévues en regard l'une de l'autre, orientées chacune vers l'axe principal A. Les butées 42 sont séparées l'une de l'autre d'un entrefer de butée E1 (voir figure 1) moins large que l'entrefer de patte E2 (voir figure 1) séparant les pattes flexibles 40 en dehors de la zone dédiée aux butées 42. Les butées 42 sont destinées à coopérer avec la goupille 2 pour écarter l'une de l'autre les extrémités libres des pattes flexibles 40. A cet effet, l'entrefer de butée E1 est moins large que la dimension correspondante de l'orifice 31 et que la largeur de la goupille 2. Pour favoriser cet écartement des pattes flexibles 40, chaque butée 42 comporte une rampe de butée 43 inclinée orientée vers la tête de goupille 30. Les parois externes des pattes flexibles 40 qui ne se font pas face forment des portions d'un cylindre d'axe principal A et dont l'extrémité est conique pour faciliter l'introduction de la douille expansible 3 dans les ouvertures 102, 103 ménagées dans les plaques 100, 101 à fixer. Ces parois sont pourvues de crénelures 44 favorisant le maintien des plaques 100, 101 après déformation des pattes élastiques 40. Entre la tête de douille 30 et les butées 42, les pattes flexibles 40 comportent une rainure circulaire 45, coaxiale avec l'axe principal A, réduisant la section des pattes flexibles 40 de sorte à former, pour chaque patte flexible 40, une première zone sécable Z1 de plus faible résistance mécanique que le reste de la douille expansible 3. Ainsi, lorsque la douille expansible 3 est soumise à un effort mécanique prédéterminé, la douille expansible 3 cédera de manière préférentielle au niveau de la première zone sécable Z1. Dans l'exemple illustré, la première zone sécable Z1 présente un profil dont le diamètre externe est inférieur à celui du reste de la patte flexible 40 correspondante. Cette première zone sécable Z1 peut également être obtenue par tout autre moyen technique adapté, par exemple le perçage d'orifice, un changement de matériau, un traitement thermique localisé. En référence à la figure 1, la première zone sécable Z1 présente par exemple une hauteur H1 d'environ 1 mm et s'étend par rapport aux troisièmes surfaces d'appui S3 d'une première distance D1 d'environ 4.2 mm à une seconde distance D2. Selon des variantes de réalisation non représentées la douille peut comporter un nombre de pattes flexibles différent.

En référence aux figures 2 à 5, la goupille 2 comporte une tête de goupille 20 et un corps 50. A l'opposé du corps 50, la tête de goupille 20 présente une forme bombée similaire à celle de la tête de douille 30. La goupille 2 comporte un plan de symétrie P2 passant par un axe secondaire B. A l'opposé de la forme bombée, la goupille 2 comporte des formes complémentaires aux première et seconde rainures 32, 33 de la tête de douille 30 pour pouvoir s'y loger. Ainsi, de sorte à être complémentaire avec la tête de douille 20, le dessous de la tête de goupille 30 définit deux secondes surfaces d'appui S2 destinées à venir en appui contre les deux troisièmes surfaces d'appui S3 de la douille expansible 3, et deux secondes surfaces de dégagement SS2 destinées à venir en regard des deux premières surfaces de dégagement SS1. La goupille 2 et la douille expansible 3 sont dimensionnées de sorte que les secondes et troisièmes surfaces d'appui S2, S3 soient en contact avant que les premières et secondes surfaces de dégagement SS1, SS2 ne le soient.

Le corps 50 présente deux portions massives 51, 52 séparées par une portion de dimensions réduites formant une seconde zone sécableZ2. Selon un plan sensiblement perpendiculaire à l'axe secondaire B, les portions massives 51, 52 présentent chacune une section de forme sensiblement carrée, de dimensions inférieures à celles de l'orifice 31 de la douille expansible 3 pour pouvoir le traverser. La seconde zone sécableZ2 se présente par exemple sous la forme d'une portion cylindrique 21 ou de toute autre forme adaptée. Comme pour la douille expansible 3, la seconde zone sécable Z2 peut être obtenue par tout autre moyen technique adapté. En référence à la figure 2, la seconde zone sécable Z2 présente par exemple une hauteur H2 d'environ 1 mm et s'étend par rapport aux secondes surfaces d'appui S2 d'une troisième distance D10 d'environ 4.2 mm à une quatrième distance D20. De manière avantageuse, la troisième distance D10 est sensiblement égale à la première distance D1 et la quatrième distance D20 est sensiblement égale à la seconde distance D2. Selon des variantes de réalisation non représentées la douille expansible peut comporter un nombre de pattes flexibles différent. Les premières faces de la portion massive 52 du corps 50 prévues en regard des secondes surfaces d'appui S2 comportent chacune un logement formant un cran 53 apte à coopérer avec la butée 42 pour former des moyens de verrouillage aptes à bloquer la goupille 2 dans la douille expansible 3. Dans cet exemple, ces premières faces comportent un évidement central 54 divisant le logement en deux. Chaque première face du corps comporte ainsi deux crans 53. Les secondes faces de la portion massive 52 du corps 50 prévues en regard des secondes surfaces de dégagement SS2 comportent chacune un premier et un second ergot 55,56 sensiblement alignés selon une direction sensiblement parallèle à l'axe secondaire B. Ces premier et second ergots 55, 56 sont distants de sorte à ménager entre eux un espace 57 pouvant recevoir l'arête d'engagement 34 de l'orifice 31 de la douille expansible 3. Selon une direction sensiblement parallèle à l'axe secondaire B, les premier et second ergots 55, 56 sont prévus entre les crans 53 et la tête de goupille 20. Les premier et second ergots 55, 56 s'étendent latéralement en s'éloignant de l'axe secondaire B d'une hauteur suffisante pour n'autoriser le franchissement des arêtes d'engagement 34 qu'en force, lors du déplacement du corps 50 dans l'orifice 31. Après engagement du premier ergot 55 dans l'orifice 31, la goupille 2 est dans une position de blocage dans la laquelle les arêtes d'engagement 34 de l'orifice 31 sont bloquées dans l'espace 57 entre les premier et second ergots 55,56. Les premier et second ergots 55,56 et les arêtes d'engagement 34 forment ainsi des moyens de blocage limitant les mouvements relatifs entre la goupille 2 et la douille expansible 3. Les premiers ergots 55 orientés vers l'extrémité libre du corps 50 présentent une hauteur supérieure à celle des seconds ergots 56 orientés vers la tête de goupille 20. Ainsi, le franchissement des arêtes d'engagement 34 par les premiers ergots 55 est plus difficile que par les seconds ergots 56. Les premiers ergots 55 comportent chacun une rampe d'ergot 58 (visible sur la figure 2) orientée vers l'extrémité libre du corps 50 et facilitant le franchissement des arêtes d'engagement 34 par les premiers ergots 55 lors de l'introduction de la goupille 2 dans l'orifice 31 la douille expansible 3. Les premiers ergots 55 présentent chacun un flanc droit 59 (visible sur la figure 2) orienté vers la tête de goupille 20 et interdisant le franchissement des arêtes d'engagement 34 par les premiers ergots 55 lors de toute tentative de retrait de la goupille 2 fors de la douille expansible 3. La goupille 2 ne peut ainsi pas être désengagée de la douille expansible 3 par simple inadvertance. La hauteur limitée des seconds ergots 56 leur permet de franchir les arêtes d'engagement 34 moyennant un effort modéré autorisant le passage de la position de blocage à une position de verrouillage décrite plus loin.

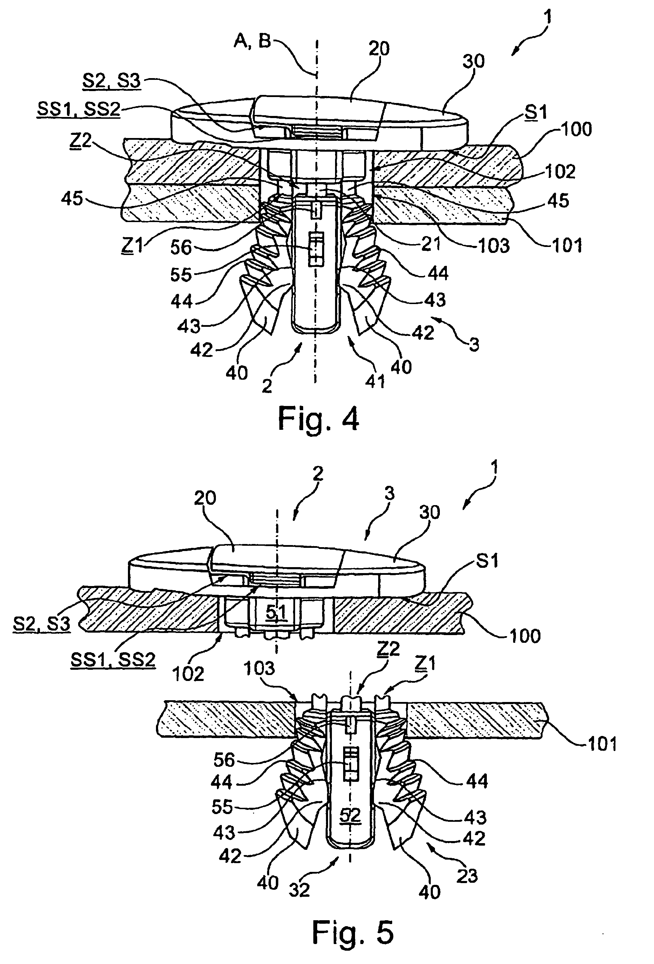

En référence aux figures 3 et 4, pour réaliser l'assemblage de deux plaques 100, 101 au moyen du dispositif de fixation sécable 1 selon l'invention, on superpose les deux plaques 100, 101 de sorte que leurs ouvertures 102, 103 soient en regard l'une de l'autre. On pré-assemble la goupille 2 dans la douille expansible 3 en engageant le corps 50 de la goupille 2 dans l'orifice 31 de la douille expansible 3. La seconde portion massive 52 est ainsi introduite dans l'entrefer de patte E2. Les axes principal et secondaire A, B sont sensiblement coaxiaux. Par une légère pression, on fait franchir l'arête d'engagement 34 par le premier ergot 55. Le dispositif de fixation sécable 1 est alors dans sa position de blocage dans laquelle la goupille 2 est retenue par l'arête d'engagement 34 et par le premier ergot 55 sur la douille expansible 3. On fait alors traverser les ouvertures 102, 103 par les pattes flexibles 40 de la douille expansible 3, le dispositif de fixation sécable 1 étant dans sa position de blocage de la goupille 2. La première surface d'appui S1 est ainsi plaquée contre la face d'une première plaque 100, les extrémités libres des pattes flexibles 40 dépassent de l'autre coté de la face opposée de la seconde plaque 101. Dans cette configuration représentée sur la figure 3, l'arête d'engagement 34 reste bloquée entre le premier et le second ergot 55, 56, les pattes flexibles 40 sont sensiblement parallèles aux axes principal et secondaire A, B. Selon un autre mode de montage, on place d'abord la douille expansible 3 au travers des ouvertures 102, 103 avant d'insérer la goupille 2 dans la douille expansible 3.

Pour finaliser l'assemblage, on déplace la goupille 2 selon son axe secondaire B vers l'extrémité libre des pattes flexibles 40, par exemple par pression sur la tête de goupille 20. L'extrémité libre du corps 50 vient en contact avec les rampes de butées 43 qu'il sollicite pour provoquer l'écartement des pattes flexibles 40 de part et d'autres des axes principal et secondaire A, B. La fente 41 est ainsi élargie, la seconde portion massive 52 est dans l'entrefer de butée E1. Avant que la seconde surface d'appui S2 de la goupille 2 ne soit en appui contre la troisième surface d'appui S3 de la douille expansible 3, le second ergot 56 franchit l'arête d'engagement 34 de l'orifice 31. La déformation des pattes flexibles 40 est prolongée jusqu'au contact entre la seconde surface d'appui S2 de la goupille 2 et la troisième surface d'appui S3 de la douille expansible 3. Dans cette configuration illustrée sur la figure 4, les pattes flexibles 40 fléchies prennent en sandwich les deux plaques 100, 101 avec la tête de douille 20 et les butées 42 et crénelures 44. Les butées 42 sont par ailleurs logées dans les crans 53, interdisant tout retrait de la goupille 2 par rapport à la douille expansible 3. Le dispositif de fixation sécable 1 est ainsi dans une position de verrouillage dans laquelle la goupille 2 est solidaire de la douille expansible 3. Dans cette position de verrouillage, les première et seconde zones sécables Z1 et Z2 sont sensiblement alignées dans un plan sensiblement perpendiculaire aux axes principal et secondaire A, B. De manière avantageuse, on choisit les plaques 100, 101 et/ou on dimensionne le dispositif de fixation sécable 1 se sorte que, de plus, les première et seconde zones sécablesZ1, Z2 soient sensiblement alignées avec le plan de contact entre les plaques 100, 101. L'assemblage obtenu permet de solidariser les plaques 100, 101 de manière fiable.

Lorsque cet assemblage est soumis à un effort prédéterminé dépassant les limites mécaniques prédéterminées des première et seconde zones sécables Z1, Z2, le dispositif de fixation sécable 1 cède au niveau de ces première et seconde zones sécables Z1, Z2, permettant la désolidarisation des plaques 100, 101 l'une de l'autre, comme illustré par la figure 5. Le fait que les première et seconde zones sécables Z1, Z2 sont disposées dans un même plan permet de faciliter leur dimensionnement ajusté pour une rupture précise sous l'effet d'un effort prédéterminé. De plus, la reproductibilité du comportement des première et seconde zones sécables Z1, Z2 face aux sollicitations est fiabilisée. Le point de rupture du dispositif de fixation sécable 1 est ainsi optimisé et garanti.

## Revendications

1. Dispositif de fixation sécable (1) d'au moins une première et une seconde plaques (100, 101) superposées entre elles, ledit dispositif de fixation sécable (1) comportant au moins une douille expansible (3) d'axe principal (A) et une goupille (2) d'axe secondaire (B), ladite douille expansible (3) comportant une tête de douille (30) définissant au moins une première surface d'appui (S1) pour ladite première plaque (100) et étant traversée par au moins un orifice (31) et prolongée par au moins une patte flexible (40), ladite goupille (2) étant apte à être engagée dans ledit orifice (31) jusqu'à une position de verrouillage dans laquelle elle est verrouillée dans ladite douille expansible (3) par des moyens de verrouillage (42, 53) et ladite patte flexible (40) est dans une position fléchie avec son extrémité libre éloignée dudit axe longitudinal (A) pour retenir l'arrière de ladite seconde plaque (101), ledit dispositif de fixation sécable (1) comportant des première et seconde zones sécables (Z1, Z2) prévues respectivement sur ladite douille expansible (3) et ladite goupille (2) et aptes chacune à rompre lorsque soumise à un effort prédéterminé, **caractérisé en ce que** ladite douille expansible (3) et ladite goupille (2) sont agencées pour que, dans ladite position de verrouillage, lesdites première et seconde zones sécables (Z1, Z2) sont alignées dans un plan sensiblement parallèle à ladite première surface d'appui (S1).

2. Dispositif de fixation sécable (1) selon la revendication précédente, **caractérisé en ce que** ladite première zone sécable (Z1) est portée par ladite patte flexible (40), **en ce que** ladite goupille (2) comporte une tête de goupille (20) définissant une seconde surface d'appui (S2) destinée à venir en appui, dans ladite position de verrouillage, contre une troisième surface d'appui (S3) prévue sur ladite tête de douille (30) à l'opposé de ladite première surface d'appui (S1), **en ce que** ladite goupille (2) comporte également un corps (50) s'étendant de ladite tête de goupille (20) et destiné à se loger dans ledit orifice (31) de ladite douille expansible (3), ladite seconde zone sécable (Z2) étant portée par ledit corps (50).

3. Dispositif de fixation sécable (1) selon la revendication précédente, **caractérisé en ce que** selon une direction sensiblement parallèle auxdits axes principal et secondaire (A, B), la troisième distance (D10) séparant ladite seconde surface d'appui (S2) de ladite seconde zone sécable (Z2) est sensiblement égale à la première distance (D1) séparant ladite troisième surface d'appui (S3) de ladite première zone sécable (Z1).

4. Dispositif de fixation sécable (1) selon au moins l'une des revendications précédentes, **caractérisé en ce que** lesdites première et seconde zones sécables (Z1, Z2) sont formées par une section de dimensions réduites sensiblement perpendiculairement respectivement auxdits axes principal (A) et secondaire (B)

5. Dispositif de fixation sécable (1) selon au moins la revendication 2, **caractérisé en ce qu'**il comporte au moins une butée (42) et un cran (53), l'un étant prévu sur ledit corps (50), l'autre sur ladite patte flexible (40) et aptes à coopérer l'un avec l'autre dans ladite position de verrouillage pour former lesdits moyens de verrouillage, ladite butée (42) et ledit cran (53) étant disposés au-delà desdites première et seconde zone sécables (Z1, Z2) par rapport respectivement à ladite tête de douille (30) et à ladite tête de goupille (20).

6. Dispositif de fixation sécable (1) selon au moins la revendication 2, **caractérisé en ce qu'**il comporte au moins une paire d'ergots (55, 56) et au moins une arête d'engagement (34), l'une étant prévue sur ledit corps (50), l'autre sur ladite patte flexible (40) et aptes à coopérer l'une avec l'autre pour former des moyens de blocage définissant une position de blocage dudit corps (50) dans ledit orifice (31), précédent ladite position de verrouillage, et dans laquelle lesdits moyens de blocage n'autorisent qu'un mouvement relatif entre ladite goupille (2) et ladite douille expansible (3) pour éviter leur séparation avant d'atteindre ladite position de verrouillage.

7. Dispositif de fixation sécable (1) selon au moins les revendications 5 et 6, **caractérisé en ce que** ladite paire d'ergots (55, 56) et ladite butée (42) sont portés par ladite goupille (2), **en ce que** ladite paire d'ergots (55, 56) est prévue entre ladite tête de goupille (20) et ladite butée (42), et **en ce que** ladite arête d'engagement (34) est prévue dans l'épaisseur de ladite tête de goupille (20).

8. Dispositif de fixation sécable (1) selon au moins l'une des revendications précédentes, **caractérisé en ce que** ladite douille expansible (3) comporte au moins deux pattes flexibles (40) disposées de part et d'autre dudit axe principal (A) et séparées l'une de l'autre par au moins une fente (41) s'étendant de leur extrémité libre respective jusqu'à ladite tête de douille (30).

9. Assemblage d'au moins une première et une seconde plaques (100, 101) comportant des ouvertures (102, 103) placées en regard l'une de l'autre, au moyen d'au moins un dispositif de fixation sécable (1) traversant lesdites ouvertures (102, 103), **caractérisé en ce qu'**il comporte au moins un dispositif de fixation sécable (1) selon au moins l'une des revendications précédentes.

## Patentansprüche

1. Trennbare Befestigungsvorrichtung (1) von wenigstens einer ersten und einer zweiten Platte (100, 101), die gegenseitig übereinander angeordnet sind, wobei die trennbare Befestigungsvorrichtung (1) wenigstens eine expandierbare Buchse (3) mit einer Hauptachse (A) und einen Stift (2) mit einer Sekundärachse (B) umfasst, wobei die expandierbare Buchse (3) einen Buchsenkopf (30) umfasst, der wenigstens eine erste Stützfläche (S1) für die erste Platte (100) definiert und durch wenigstens eine Öffnung (31) durchsetzt und durch wenigstens einen flexiblen Fuß (40) verlängert ist, wobei der Stift (2) in die Öffnung (31) eingesetzt werden kann bis zu einer Verriegelungsposition, in welcher er in der expandierbaren Buchse (3) verriegelt ist durch Verriegelungsmittel (42, 53) und der flexible Fuß (40) in einer gebogenen Position ist, in der sein freies Ende von der Längsachse (A) entfernt ist, um die Rückseite der zweiten Platte (101) zu halten, wobei die trennbare Befestigungsvorrichtung (1) erste und zweite trennbare Zonen (Z1, Z2) aufweist, die jeweils an der expandierbaren Buchse (3) und an dem Stift (2) vorgesehen sind und die jeweils in der Lage sind zu brechen, wenn sie einer vorbestimmten Beanspruchung unterworfen sind,
**dadurch gekennzeichnet,**
**dass** die expandierbare Buchse (3) und der Stift (2) derart angeordnet sind, dass in der Verriegelungsposition die ersten und zweiten trennbaren Zonen (Z1, Z2) in einer im Wesentlichen zu der ersten Stützfläche (S1) parallelen Ebene ausgerichtet sind.

2. Trennbare Befestigungsvorrichtung (1) nach dem vorhergehenden Anspruch, **dadurch gekennzeichnet, dass** die erste trennbare Zone (Z1) von dem flexiblen Fuß (40) getragen ist, dass der Stift (2) einen Stiftkopf (20) aufweist, der eine zweite Stützfläche (S2) definiert, die dazu bestimmt ist, in der verriegelten Position gegen eine auf dem Buchsenkopf (30) entgegengesetzt zu der ersten Stützfläche (S1) vorgesehene dritte Stützfläche (S3) in Abstützung zu gelangen, dass der Stift (2) ebenfalls einen Körper (50) umfasst, der sich von dem Stiftkopf (20) erstreckt und dazu bestimmt ist, in die Öffnung (31) der expandierbaren Buchse (3) aufgenommen zu werden, wobei die zweite trennbare Zone (Z2) von dem Körper (50) getragen ist.

3. Trennbare Befestigungsvorrichtung (1) nach dem vorhergehenden Anspruch, **dadurch gekennzeichnet, dass** gemäß einer im Wesentlichen zu den Haupt- und Sekundärachsen (A, B) parallelen Richtung der dritte Abstand (D10), der die zweite Stützfläche (S2) von der trennbaren Zone (Z2) trennt, im Wesentlichen gleich dem ersten Abstand (D1), der die dritte Stützfläche (S3) von der ersten trennbaren Zone (Z1) trennt, ist.

4. Trennbare Befestigungsvorrichtung (1) gemäß wenigstens einem der vorhergehenden Ansprüche, **dadurch gekennzeichnet, dass** die ersten und zweiten trennbaren Zonen (Z1, Z2) gebildet sind durch einen Abschnitt von reduzierten Abmessungen, der im Wesentlichen senkrecht jeweils zu den Hauptachse (A) und Sekundärachse (B) ist.

5. Trennbare Befestigungsvorrichtung (1) gemäß zumindest Anspruch 2, **dadurch gekennzeichnet, dass** sie wenigstens einen Anschlag (42) und eine Raste (53) umfasst, wobei die eine an dem Körper (50), der andere an dem flexiblen Fuß (40) vorgesehen ist, und die in der Lage sind, einer mit der anderen in der Verriegelungsposition zusammenzuwirken zum Bilden der Verriegelungsmittel, wobei der Anschlag (42) und die Raste (53) jenseits der ersten und zweiten trennbaren Zonen (Z1, Z2), in Bezug jeweils auf den Buchsenkopf (30) und den Stiftkopf (20), angeordnet sind.

6. Trennbare Befestigungsvorrichtung (1) nach zumindest Anspruch 2, **dadurch gekennzeichnet, dass** sie wenigstens ein Paar Zapfen (55, 56) und wenigstens einen Eingriffssteg (34) umfasst, wobei das eine an dem Körper (50), der andere an dem flexiblen Fuß (40) vorgesehen ist, und die in der Lage sind, der eine mit dem anderen zusammenzuwirken, um Blockiermittel zu bilden, die eine Blockierposition des Körpers (50) in der Öffnung (31) definieren, die der Verriegelungsposition vorausgeht, und in der die Blockiermittel nur eine Relativbewegung zwischen dem Stift (2) und der expandierbaren Buchse (3) zum Verhindern ihrer Trennung vor dem Erreichen der Verriegelungsposition erlauben.

7. Trennbare Befestigungsvorrichtung (1) gemäß zumindest Anspruch 5 und 6, **dadurch gekennzeichnet, dass** das Paar Zapfen (55, 56) und der Anschlag (42) durch den Stift (2) getragen sind, dass das Paar Zapfen (55, 56) zwischen dem Stiftkopf (20) und dem Anschlag (42) vorgesehen ist, und dass der Eingriffssteg (34) in der Dicke des Stiftkopfs (20) vorgesehen ist.

8. Trennbare Befestigungsvorrichtung (1) nach zumindest einem der vorhergehenden Ansprüche, **dadurch gekennzeichnet, dass** die expandierbare Buchse (3) wenigstens zwei flexible Füße (40) umfasst, die einerseits und andererseits der Hauptachse (A) angeordnet sind und der eine von dem anderen durch wenigstens einen Spalt (41) getrennt sind, welcher sich von deren jeweils freien Ende bis zu dem Buchsenkopf (30) erstreckt.

9. Verbindung von wenigstens einer ersten und einer zweiten Platte (100, 101), umfassend Öffnungen (102, 103), die einander zugekehrt angeordnet sind, mittels wenigstens einer trennbaren Befestigungsvorrichtung (1), die die Öffnungen (102, 103) durchsetzt, **dadurch gekennzeichnet, dass** sie wenigstens eine trennbare Befestigungsvorrichtung (1) nach zumindest einem der vorhergehenden Ansprüche umfasst.

## Claims

1. A breakable attachment device (1) for at least a first and a second plates (100, 101) superposed together, said breakable attachment device (1) comprising at least an expandable dowel (3) with a main axis (A) and a pin (2) with secondary axis (B), said expandable dowel (3) having a dowel head (30) defining at least a first bearing surface (S1) to said first plate (100) and being traversed by at least an orifice (31) and extended by at least a flexible tab (40), said pin (2) being adapted to be engaged in said orifice (31) up to a locking position wherein it is locked in said expandable dowel (3) by locking means (42, 53) and said flexible tab (40) is in a flexed position with its free end far away from said longitudinal axis (A) for retaining the rear of said second plate (101), said breakable attachment device (1) having first and second breakable areas (Z1, Z2) respectively provided on said expandable dowel (3) and said pin (2) and each adapted to break when subjected to a predetermined force, **characterized in that** said expandable dowel (3) and said pin (2) are arranged so that, in said locking position, said first and second breakable areas (Z1, Z2) are aligned in a plane substantially parallel to said first bearing surface (S1).

2. A breakable attachment device (1) according to the preceding claim, **characterized in that** said first breakable area (Z1) is carried by said flexible tab (40), **in that** said pin (2) has a pin head (20) defining a second bearing surface (S2) designed to abut, in said locking position, against a third bearing surface (S3) provided on said dowel head (30) opposite from said first bearing surface (S1), **in that** said pin (2) also comprises a body (50) extending from said pin head (20) and adapted to fit in said orifice (31) of said expandable dowel (3), said second breakable area (Z2) being carried by said body (50).

3. A breakable attachment device (1) according to the preceding claim, **characterized in that** the third distance (D10) separating said second bearing surface (S2) from said second breakable area (Z2) is substantially equal to the first distance (D1) separating said third bearing surface (S3) from said first breakable area (Z1), in a substantially parallel direction to said main and secondary axis (A, B).

4. A breakable attachment device (1) according to at least one of the preceding claims, **characterized in that** said first and second breakable areas (Z1, Z2) are formed by a section of reduced dimensions substantially perpendicular respectively to said main (A) and secondary (B) axis.

5. A breakable attachment device (1) according to at least claim 2, **characterized in that** it comprises at least an abutment (42) and a notch (53), one being provided on said body (50), the other on said flexible tab (40) and adapted to cooperate with each other in said locking position to form said locking means, said abutment (42) and said notch (53) being disposed beyond said first and second breakable areas (Z1, Z2) relative respectively to said dowel head (30) and said pin head (20).

6. A breakable attachment device (1) according to at least claim 2, **characterized in that** it comprises at least a pair of lugs (55, 56) and at least an engaging edge (34), one being provided on said body (50), the other on said flexible tab (40) and adapted to cooperate with each other to form the blocking means defining a blocking position of said body (50) in said orifice (31) preceding said locking position, and wherein said locking means permit only a relative movement between said pin (2) and said expandable dowel (3) to prevent their separation before reaching said locking position.

7. A breakable attachment device (1) according to at least claims 5 and 6, **characterized in that** said pair of lugs (55, 56) and said abutment (42) are carried by said pin (2), **in that** said pair of lugs (55, 56) is provided between said pin head (20) and said abutment (42), and **in that** said engaging edge (34) is provided in the thickness of said pin head (20).

8. A breakable attachment device (1) according to at least one of the preceding claims, **characterized in that** said expansion dowel (3) comprises at least two flexible tabs (40) arranged on either side of said main axis (A) and separated from each other by at least a slot (41) extending to their respective free end to said dowel head (30).

9. An assembly of at least a first and second plates (100, 101) having openings (102, 103) placed facing one another by means of at least a breakable attachment device (1) passing through said openings (102, 103), **characterized in that** it comprises at least a breakable attachment device (1) according to at least one of the preceding claims.
